# EUROPEAN PATENT SPECIFICATION

(11) **EP 4 132 769 B1**
(45) Date of publication and mention of the grant of the patent: **13.05.2026**
(21) Application number: 21714179.5
(22) Date of filing: 26.03.2021
(51) Int. Cl.: B29C 64/124, B29C 64/245, B33Y 10/00, B33Y 30/00

(54) **BUILDING PLATE ASSEMBLY FOR USE IN AN ADDITIVE MANUFACTURING APPARATUS**
BAUPLATTENANORDNUNG ZUR VERWENDUNG IN EINER VORRICHTUNG ZUR GENERATIVEN FERTIGUNG
ENSEMBLE PLAQUE DE CONSTRUCTION DESTINÉ À ÊTRE UTILISÉ DANS UN APPAREIL DE FABRICATION ADDITIVE

(30) Priority: 08.04.2020 EP 20168611
(43) Date of publication of application: 15.02.2023
(73) Proprietor: Dentsply Sirona Inc., York, PA 17401 (US); Sirona Dental Systems GmbH, 64625 Bensheim (DE)
(72) Inventor: STAHL, Christian, 64625 Bensheim (DE); BRANDES, Christoph, 64625 Bensheim (DE)
(74) Representative: Allen, Caroline Margaret
(86) International application number: PCT/EP2021/057871
(87) International publication number: WO 2021/204560

(56) References cited:
- WO-A1-2016/172805
- WO-A1-2019/012103
- US-A1- 2020 001 524

## Description

### TECHNICAL FIELD OF THE INVENTION

The present invention relates to an additive manufacturing apparatus. The present invention also relates to a method of controlling the additive manufacturing apparatus. The present invention more particularly relates to the building plate of the additive manufacturing apparatus.

### BACKGROUND ART OF THE INVENTION

In additive manufacturing techniques, such as stereolithography (SLA) or digital light processing (DLP), a three dimensional component is printed layer-by-layer through light-based curing of a liquid printing medium i.e., a liquid photocurable resin, which is selectively cured under the influence of UV radiation. In a commonly known variation of additive manufacturing, the 3D components are preferably pulled by means of a building plate, upside-down out of the liquid photocurable material filled in a vat. Other variations of additive manufacturing are also known to those skilled in the art.

A commonly known problem in the additive manufacturing is that after 3D printing, the printed 3D component (hereinafter referred to as component) must be removed from the building plate. This is typically done with a spatula. Thus, the removal process is not very comfortable to handle and can cause injury to the user if the sharp-edged spatula slips off. Another commonly known problem in the additive manufacturing is that the adhesion between the printing film, the resin and the building plate may create large forces, especially for a building plate with large surface area, when pulling the building plate away from the printing film in the vat. Building plates with honeycomb like structure are commonly used to reduce the surface area of the building plate and thus the resulting adhesion. However, the open honeycombs are usually partially filled with resin during the 3D printing, which hardens in the honeycombs, making it even more difficult to remove the component. Moreover, the honeycombs must then be laboriously cleaned.

Reference is made to US2020001524A1 which discloses a system and method for manufacturing a three-dimensional object.

Reference is further made to WO2019012103A1 discloses sacrificial additively manufactured molds for use in injection molding processes.

Reference is further made to WO2016172805A1 which discloses a building plate assembly according to the preamble of claim 1.

### DISCLOSURE OF THE INVENTION

An objective of the present invention is to overcome the problems of the prior art and provide a building plate assembly for use in an additive manufacturing apparatus.

This objective has been achieved through the building plate assembly as defined in claim 1, the additive manufacturing apparatus as defined in claim 18, and the method of controlling the additive manufacturing apparatus as defined in claim 20.

The dependent claims relate to further embodiments and developments.

The present invention provides a building plate assembly for use in an additive manufacturing apparatus comprising means for additively manufacturing a component through curing photocurable resin. The building plate assembly comprises: a building plate having a front surface on which said component can be attached during the additive manufacturing; a plurality of through holes formed between the rear surface and the front surface of the building plate; and a detachment means having one or more projections which can be relatively moved towards the rear surface and into the through-holes to detach the component from the front surface and, retracted to at least partly clear/evacuate the through-holes.

A major advantageous effect of the present invention is that through the detachment means the component can be easily detached from the front surface of the building plate, without the need of using a spatula or the like and thus the risk of injury can be eliminated. Another major advantageous effect of the present invention is that through the detachment means the through holes in the building plate can be simultaneously pierced free from resin during the detachment of the component, and thus the user can immediately obtain a clean building plate again after completion of the detachment. Thus, the detachment of the component and the cleaning of the honeycomb structure can be safely and easily achieved in a single step by pressing the projections into the through holes. Another major advantageous effect of the present invention is that thanks to the through-holes of the building plate the adhesion can be reduced during the pulling of the building plate away from the printing film, and thus the 3D printing can be improved.

According to the present invention, the detachment means is provided like a negative form of the building plate to allow pressing the resin out of the through-holes. Therefore, in an embodiment, the detachment means has a detachment plate which is arranged relatively movable within a gap behind the rear surface of the building plate. And the projections are arranged on the detachment plate at a plurality of positions corresponding to the through-holes respectively. The building plate and the detachment plate are preferably substantially parallel and separated through a substantially constant gap. The building plate and the detachment plate have preferably substantially the same size such that the through holes and the projections can be substantially uniformly arranged over their entire areas respectively. The through-holes and the corresponding projections preferably have complementary shapes with sufficiently small clearance for allowing the relative movement. The through-holes and the corresponding projections may have various different shapes of cross sections. The cross-section may be circular, oval or polygonal. The through-holes and the corresponding projections may have also tapered shapes. The through-holes of the building plate and the corresponding projection are preferably arranged in a two-dimensional array which preferably extends over the entire building plate and the detachment plate. The through-holes and the corresponding projections preferably form a honeycomb-like structure.

According to the present invention, the detachment plate and building plate have a retracted state and a compressed state. It is preferable that the in the retracted state the projections are either completely outside or, alternatively, remain only partially inside the through holes such that the front section of the through holes are cleared and can effectively reduce the adhesion during the 3D printing. It is also preferable that in the compressed state either the tips of the projections are at least partially inside the through holes, or leveled with the front surface, or even protrude out of the front surface so that the detachment process can be securely affected.

According to the present invention, the detachment means is preferably biased from the compressed state towards the retracted state. Therefore, in an embodiment, the detachment means comprises a resilient means for biasing the detachment plate away from the rear surface of the building plate to clear the through holes at least partially. The resilient means preferably comprises one or more compression springs arranged between the detachment plate and the building plate. Alternatively, one or more leaf springs or the like may be used.

According to the present invention, the detachment means preferably comprises a guiding means for stably guiding the detachment plate relative to the building plate during the movement between the compressed state and the retracted state. The guiding means also limits their relative positions of the detachment plate and the building plate so that an undesired disassembly thereof can be prevented.

According to the present invention, the building plate assembly preferably has a mounting means for releasably mounting the building plate into the additive manufacturing apparatus. The mounting/unmounting operation is preferably conducted through a motorized automated mechanism. Alternatively, the mounting/unmounting operation may be conducted manually. Thus, the building plate assembly and the component can be unmounted for treatment in a post processing unit. In an embodiment, the mounting means is preferably disposed on the detachment means, more preferably on the detachment plate. During the 3D printing, the detachment plate and the building plate may be fixed by means of a locking/unlocking means relative to each other to prevent relative movement. Alternatively, the mounting means may be disposed on the rear side of the building plate.

According to the present invention, the detachment means is preferably solely hand-driven by the user. Alternatively, the detachment means may be provided with a motorized actuator that is built into the building plate assembly for pressing/retracting the projections into/out of the through holes.

The present invention also provides an additive manufacturing apparatus which comprises the building plate assembly. After the 3D printing, the building plate assembly can be unmounted from the additive manufacturing apparatus. The building plate assembly can be detachably mounted into a post processing unit for washing/drying/curing. The user can perform the washing step of the building plate assembly together with the component in the post processing unit. Thereafter, the user can manually press the detachment plate against the negative building plate to detach the component attached on its front surface. Alternatively, the motorized actuator may be used for initiating the detachment process. The building plate assembly may be also battery driven and/or connectable to a power source in the post processing unit and in the additive manufacturing apparatus for supplying power to the motorized actuator.

### BRIEF DESCRIPTION OF THE DRAWINGS

In the subsequent description, further aspects and advantageous effects of the present invention will be described in more detail by using exemplary embodiments and by referring to the drawings, wherein
Fig. 1 - is a schematic vertical sectional partial view of a building plate assembly according to an embodiment of the present invention;
Fig. 2 - is a schematic vertical sectional partial view of a building plate assembly according to an alternative embodiment of the present invention;
Fig. 3 - is a schematic enlarged detailed view of the region A of the building plate assembly of Fig. 1, when the projections have been relatively moved into the through holes during the detachment process;
Fig. 4 - is a schematic enlarged detailed view of a region A of the building plate assembly according to an alternative embodiment, when the projections have been relatively moved into the through holes during the detachment process;
Fig. 5 - are schematic sectional partial views of the building plate assembly during the printing process and a detachment process according to a first embodiment;
Fig. 6 - are schematic sectional partial views of the building plate assembly during the printing process and a detachment process according to a second embodiment.

The reference numbers shown in the drawings denote the elements as listed below and will be referred to in the subsequent description of the exemplary embodiments:
1. Building plate assembly
2. Component (printed object)
3. Building plate
   3a. Front surface
   3b. Through hole
   3c. Rear surface
4. Detachment means
   4a. Projections
   4b. Detachment plate
   4c. Resilient means
   4d. Spring
   4e. Guiding means
5. Mounting means

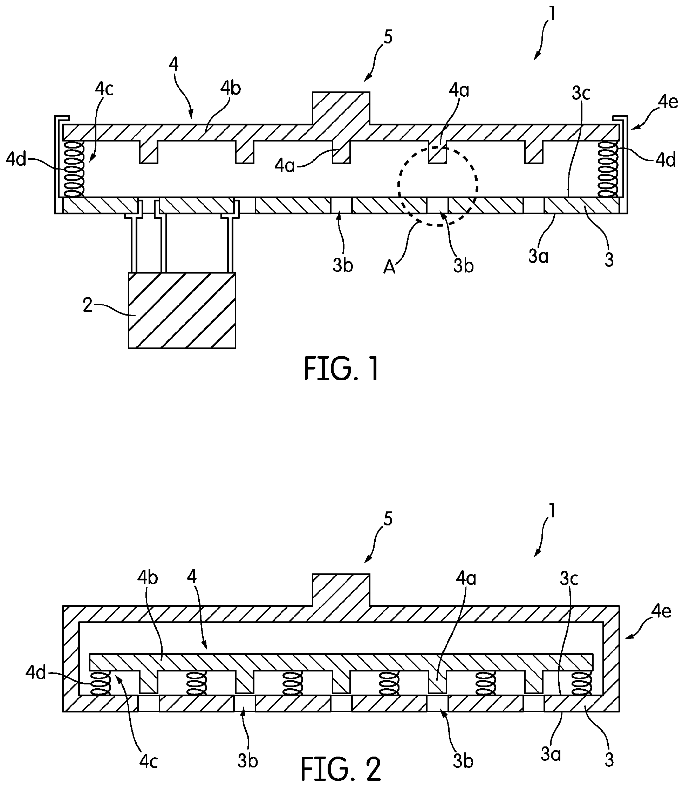

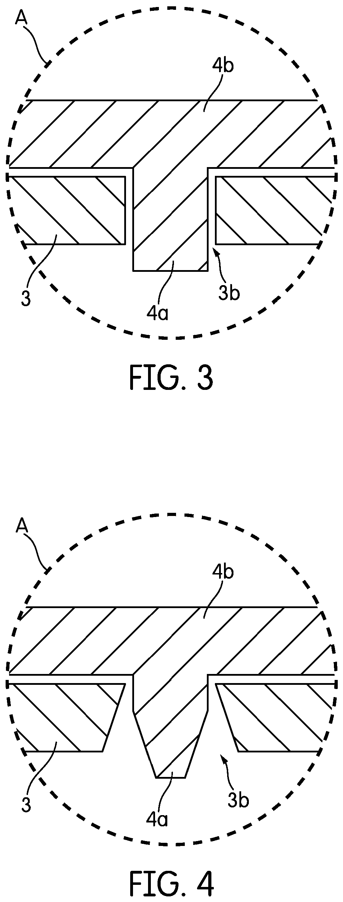

Fig. 1 and Fig. 2 show alternative embodiments of a building plate assembly (1) which is suitable for use in an additive manufacturing apparatus that comprises means for additively manufacturing a component (2) through curing photocurable resin. The present invention also provides an additive manufacturing apparatus that comprises the building plate assembly (1). The features of the additive manufacturing apparatus commonly known to those skilled in the art will be omitted in the description. As shown in Fig. 1 and 2, the building plate assembly (1) comprises: a building plate (3) having a front surface (3a) on which said component (2) can be attached during the additive manufacturing; a plurality of through holes (3b) formed between the rear surface (3c) and the front surface (3a) of the building plate (3); and a detachment means (4) having a plurality of projections (4a) which can be relatively moved towards the rear surface (3c) and into the through-holes (3b) to detach the component (2) from the front surface (3a) and, retracted to clear the through-holes (3b). In Fig. 1 and Fig. 2, the detachment means (4) is shown in the retracted state where the through-holes (3b) are completely cleared from the projections (4a). The 3D printing process can be performed in the retracted state. The detachment means (4) comprises: a detachment plate (4b) which is arranged relatively movable within a gap behind the rear surface (3c) of the building plate (3). The projections (4a) are arranged on the detachment plate (4b) at a plurality of positions corresponding to the through-holes (3b) respectively. The projections (4a) are outside the through holes (3b) in the retracted state. The building plate (3) and the detachment plate (4b) are substantially parallel and separated through the gap. The building plate (3) and the detachment plate (4b) have substantially the same size. As shown in Fig.3, the tips of the projections (4a) are shortly before becoming leveled with the front surface (3a) as the furthest moved position is approached i.e., the compressed state. The detachment means (4) comprises: a resilient means (4c) for biasing the detachment plate (4b) away from the rear surface (3c) of the building plate (3) i.e., from the compressed state to the retracted state. The resilient means (4c) comprises one or more compression springs (4d) arranged between the detachment plate (4b) and the building plate (3). The detachment means (4) comprises: a guiding means (4e) for stably guiding the detachment plate (4b) relative to the building plate (3) and limiting their relative positions. The building plate assembly (1) comprises a mounting means (5) for releasably mounting the building plate (3) into the additive manufacturing apparatus. As shown in Fig. 1, the mounting means (5) is disposed on the detachment means (4), in particular on the detachment plate (4b). During the 3D printing, the building plate (3) and the detachment plate (4b) can be relatively fixed through a locking means to prevent relative movement such as oscillations and the like. In the alternative embodiment as shown in Fig. 2, the mounting means (5) is disposed on the rear side of the building plate (3). As shown in Fig. 2, mounting means (5) and the building plate (3) are connected via the guiding means (4e). As shown in Fig.3, the through-holes (3b) and the corresponding projections (4a) have complementary shapes with sufficiently small clearance for allowing the relative movement. The through-holes (3b) and the corresponding projections (4a) may have circular, oval or polygonal cross sections. As shown in an alternative embodiment in Fig.4, the through-holes (3b) are tapered towards the rear surface (3c) and the corresponding projections (4a) are tapered towards the front surface (3a). In both alternative embodiments in Fig. 1 and Fig. 2, the detachment means (4) can be solely hand-driven by the user: After the 3D printing, the building plate assembly (1) can be unmounted from the additive manufacturing apparatus. The user can perform the washing step of the building plate assembly (1) and the component (2) as usual in a separate post processing unit. Thereafter, the user can press manually the detachment plate (4b) against the negative building plate (3) to detach the component (2). In an alternative embodiment (not shown), the detachment means (4) has a motorized actuator which is adapted to move the projections (4a) relatively into the through holes (3b) so as to detach the component (2).

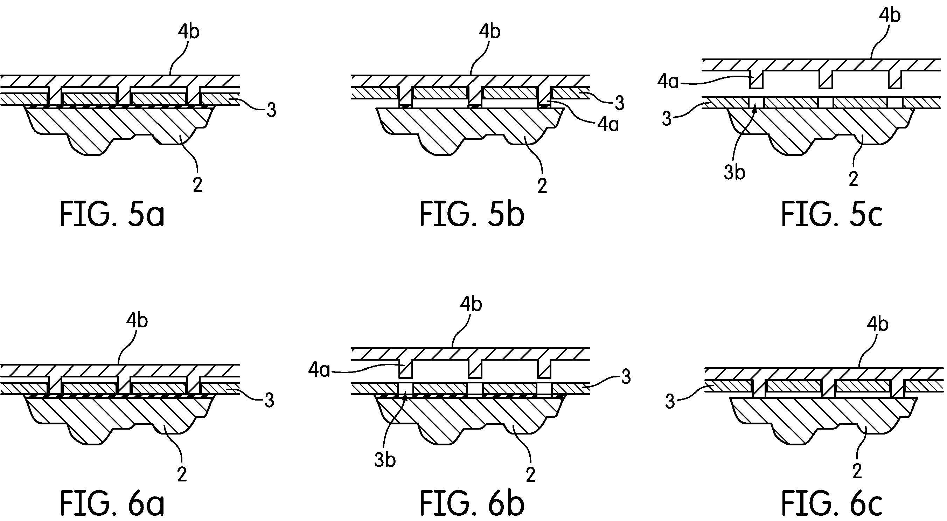

The additive manufacturing apparatus comprises the building plate assembly (1) and a control means for controlling the building plate assembly (1). The control means has at least a printing mode and one or more detachment modes. As shown in Fig. 5a and Fig.6a, in the printing mode the tips of the projections (4a) are leveled with the front surface (3a) of the building plate (3) during printing of the object (2). The dark shaded region in Fig. 5 and Fig. 6 show the adhesion between the printed object (2) and the front surface (3a) of the building plate (3) and the projections (4a). As shown in Fig 5b and Fig.5c, in a first detachment mode the tips of the projections (4a) are first protruded through the front surface (3a) so as to detach the printed object (2) from the front surface (3a), and subsequently retracted from the front surface (3a) of the building plate (3) in order to detach the tips of the projections (4a) from the printed object (2). Alternatively, as shown Fig. 6b and Fig. 6c, in a second detachment mode the tips of the projections (4a) are first retracted from the front surface (3a) of the building plate (3) in order to detach the tips of the projections (4a) from the printed object (2), and subsequently protruded through the front surface (3a) so as to detach the printed object (2) from the front surface (3a).

The printing mode is active while the object (2) is formed during the additive manufacturing process. The detachment modes can be selectively activated after the additive manufacturing process is completed for detaching the printed object. The first and second detachment modes can be alternatively used by the control means as different embodiments.

In a further embodiment, the additive manufacturing apparatus further comprises a measurement means (not shown) for sensing the force exerted on the projections (4a). In this embodiment, the drive of the detachment means is controlled based on the sensed force (4). The measurement means preferably includes one or more force sensors.

## Claims

1. A building plate assembly (1) for use in an additive manufacturing apparatus comprising means for additively manufacturing a component (2), namely a printed object through curing liquid photocurable resin in a vat, the building plate assembly (1) comprising:
a building plate (3) having a front surface (3a) on which said component (2) can be printed layer-by-layer through light-based curing of the liquid photocurable resin during the additive manufacturing and for pulling, said attached component (2) upside-down out of the photocurable resin filled in the vat;
a plurality of through holes (3b) formed between the rear surface (3c) and the front surface (3a) of the building plate (3);
**characterized by** further comprising:
a detachment means (4) having one or more projections (4a) which can be relatively moved towards the rear surface (3c) and into the through-holes (3b) to detach the component (2) from the front surface (3a) and retracted to at least partly clear the through-holes (3b), wherein the detachment means (4) comprises a detachment plate (4b), and wherein the through-holes (3b) and the corresponding projections (4a) are arranged in a two-dimensional array which extends over the entire building plate (3) and the detachment plate (4b), and wherein the through-holes (3b) and the corresponding projections (4a) form a honeycomb-like structure or the like.

2. The building plate assembly (1) according to claim 1, wherein the detachment plate (4b) is arranged relatively movable within a gap behind the rear surface (3c) of the building plate (3), wherein the projections ( 4a) are arranged on the detachment plate ( 4b) at a plurality of positions corresponding to the through-holes (3b) respectively.

3. The building plate assembly (1) according to claim 2, **characterized in that** the detachment plate (4b) and the building plate (3) are substantially parallel and separated through the gap.

4. The building plate assembly (1) according to any one of claims 2 or 3, **characterized in that** the detachment plate (4b) and the building plate (3) have substantially the same size.

5. The building plate assembly (1) according to any one of claims 1 to 4, **characterized in that** the projections (4a) are outside or partially inside the through holes (3b) in the retracted position, and wherein the tips of the projections (4a) are either partially inside the through holes (3b), leveled with the front surface (3a) or protruded from the front surface (3a) in the furthest moved position.

6. The building plate assembly (1) according to any one of claims 2 to 5, **characterized in that** the detachment means (4) comprises: a resilient means (4c) for biasing the detachment plate (4b) away from the rear surface (3c) of the building plate (3).

7. The building plate assembly (1) according to claim 6, **characterized in that** the resilient means (4c) comprises one or more compression springs (4d) arranged between the detachment plate (4b) and the building plate (3).

8. The building plate assembly (1) according to any one of claims 2 to 7, **characterized in that** the detachment means (4) comprises: a guiding means (4e) for stably guiding the detachment plate (4b) relative to the building plate (3) and limiting their relative positions.

9. The building plate assembly (1) according to any one of claims 1 to 8, **characterized by** further comprising: a mounting means (5) for releasably mounting the building plate (3) into the additive manufacturing apparatus.

10. The building plate assembly (1) according to claim 9, **characterized in that** the mounting means (5) is disposed on the detachment means (4).

11. The building plate assembly (1) according to claim 10, where dependent on claim 2, **characterized in that** the mounting means (5) is disposed on the detachment plate (4b).

12. The building plate assembly (1) according to claim 9, **characterized in that** the mounting means (5) is disposed on the rear side of the building plate (3).

13. The building plate assembly (1) according to any one of claims 1 to 12, **characterized in that** the through-holes (3b) and the corresponding projections (4a) have complementary shapes with sufficiently small clearance for allowing the relative movement.

14. The building plate assembly (1) according to any one of claims 1 to 13, **characterized in that** the through-holes (3b) and the corresponding projections (4a) have circular, oval or polygonal cross sections.

15. The building plate assembly (1) according to any one of claims 1 to 14, **characterized in that** the through-holes (3b) are tapered towards the rear surface (3c) and/or the corresponding projections (4a) are tapered towards the front surface (3a).

16. The building plate assembly (1) according to any one of claims 1 to 15, **characterized in that** the detachment means (4) has a motorized actuator which is adapted to move the projections (4a) relatively into the through holes (3b) so as to detach the component (2).

17. The building plate assembly (1) according to any one of claims 1 to 16, **characterized in that** detachment means (4) can be solely hand-driven by the user.

18. An additive manufacturing apparatus comprising:
the building plate assembly (1) according to any one of the preceding claims; and a control means for controlling the building plate assembly (1), wherein the control means has at least a printing mode and one or more detachment modes;
the control means is adapted to control the building plate assembly (1) such that in the printing mode the tips of the projections (4a) are leveled with the front surface (3a) of the building plate (3) during printing of the object,
in a first detachment mode the tips of the projections (4a) are first protruded through the front surface (3a) so as to detach the printed object from the front surface (3a), and subsequently retracted from the front surface (3a) of the building plate (3) in order to detach the tips of the projections (4a) from the printed object, or alternatively
in a second detachment mode the tips of the projections (4a) are first retracted from the front surface (3a) of the building plate (3) in order to detach the tips of the projections (4a) from the printed object, and subsequently protruded through the front surface (3a) so as to detach the printed object from the front surface (3a).

19. The additive manufacturing apparatus according to claim 18, **characterized by** further comprising:
a measurement means for sensing the force exerted on the projections (4a), wherein the control means is further adapted to control the building plate assembly (1) based on the sensed force (4).

20. A method of controlling an additive manufacturing apparatus, wherein the additive manufacturing apparatus is according to claim 18 or 19.

## Patentansprüche

1. Bauplattenanordnung (1) zur Verwendung in einer Vorrichtung zur generativen Fertigung, umfassend Mittel zum generativen Fertigen einer Komponente (2), nämlich eines gedruckten Objekts, durch Aushärten eines flüssigen photohärtbaren Harzes in einem Bottich, wobei die Bauplattenanordnung (1) Folgendes umfasst:
eine Bauplatte (3) mit einer Vorderfläche (3a), auf die die Komponente (2) durch lichtbasiertes Härten des flüssigen photohärtbaren Harzes während der generativen Fertigung und schichtweise gedruckt werden kann, und zum Ziehen der angebrachten Komponente (2) mit dem Kopf nach unten aus dem in den Bottich gefüllten photohärtbaren Harz;
eine Vielzahl von Durchgangslöchern (3b), die zwischen der Rückfläche (3c) und der Vorderfläche (3a) der Bauplatte (3) ausgebildet sind;
**gekennzeichnet durch** weiteres Umfassen von:
ein Loslösemittel (4) mit einem oder mehreren Vorsprüngen (4a), die relativ zu der Rückfläche (3c) hin und in die Durchgangslöcher (3b) bewegt werden können, um die Komponente (2) von der Vorderfläche (3a) loszulösen, und zurückgezogen werden können, um die Durchgangslöcher (3b) zumindest teilweise freizugeben, wobei das Loslösemittel (4) eine Loslöseplatte (4b) umfasst und wobei die Durchgangslöcher (3b) und die entsprechenden Vorsprünge (4a) in einer zweidimensionalen Aufstellung arrangiert sind, die sich über die gesamte Bauplatte (3) und die Loslöseplatte (4b) erstreckt, und wobei die Durchgangslöcher (3b) und die entsprechenden Vorsprünge (4a) eine wabenartige Struktur oder dergleichen bilden.

2. Bauplattenanordnung (1) nach Anspruch 1, wobei die Loslöseplatte (4b) relativ beweglich innerhalb eines Spalts hinter der Rückfläche (3c) der Bauplatte (3) arrangiert ist, wobei die Vorsprünge (4a) an der Loslöseplatte (4b) an einer Vielzahl von Positionen arrangiert sind, die jeweils den Durchgangslöchern (3b) entsprechen.

3. Bauplattenanordnung (1) nach Anspruch 2, **dadurch gekennzeichnet, dass** die Loslöseplatte (4b) und die Bauplatte (3) im Wesentlichen parallel und durch den Spalt getrennt sind.

4. Bauplattenanordnung (1) nach einem der Ansprüche 2 oder 3, **dadurch gekennzeichnet, dass** die Loslöseplatte (4b) und die Bauplatte (3) im Wesentlichen die gleiche Größe aufweisen.

5. Bauplattenanordnung (1) nach einem der Ansprüche 1 bis 4, **dadurch gekennzeichnet, dass** die Vorsprünge (4a) außerhalb oder teilweise innerhalb der Durchgangslöcher (3b) in der zurückgezogenen Position sind, und wobei die Spitzen der Vorsprünge (4a) entweder teilweise innerhalb der Durchgangslöcher (3b) sind, mit der Vorderfläche (3a) nivelliert sind oder von der Vorderfläche (3a) in der am weitesten bewegten Position vorstehen.

6. Bauplattenanordnung (1) nach einem der Ansprüche 2 bis 5, **dadurch gekennzeichnet, dass** das Loslösemittel (4) Folgendes umfasst: ein elastisches Mittel (4c) zum Vorspannen der Loslöseplatte (4b) weg von der Rückfläche (3c) der Bauplatte (3).

7. Bauplattenanordnung (1) nach Anspruch 6, **dadurch gekennzeichnet, dass** das elastische Mittel (4c) eine oder mehrere Druckfedern (4d) umfasst, die zwischen der Loslöseplatte (4b) und der Bauplatte (3) arrangiert sind.

8. Bauplattenanordnung (1) nach einem der Ansprüche 2 bis 7, **dadurch gekennzeichnet, dass** das Loslösemittel (4) Folgendes umfasst: ein Führungsmittel (4e) zum stabilen Führen der Loslöseplatte (4b) relativ zur Bauplatte (3) und Begrenzen ihrer relativen Positionen.

9. Bauplattenanordnung (1) nach einem der Ansprüche 1 bis 8, **gekennzeichnet durch** weiteres Umfassen von: einem Montagemittel (5) zum lösbaren Montieren der Bauplatte (3) in der Vorrichtung zur generativen Fertigung.

10. Bauplattenanordnung (1) nach Anspruch 9, **dadurch gekennzeichnet, dass** das Montagemittel (5) an dem Loslösemittel (4) angeordnet ist.

11. Bauplattenanordnung (1) nach Anspruch 10, sofern abhängig von Anspruch 2, **dadurch gekennzeichnet, dass** das Montagemittel (5) an der Loslöseplatte (4b) angeordnet ist.

12. Bauplattenanordnung (1) nach Anspruch 9, **dadurch gekennzeichnet, dass** das Montagemittel (5) an der Rückseite der Bauplatte (3) angeordnet ist.

13. Bauplattenanordnung (1) nach einem der Ansprüche 1 bis 12, **dadurch gekennzeichnet, dass** die Durchgangslöcher (3b) und die entsprechenden Vorsprünge (4a) komplementäre Formen mit ausreichend kleinem Spiel aufweisen, um die relative Bewegung zu ermöglichen.

14. Bauplattenanordnung (1) nach einem der Ansprüche 1 bis 13, **dadurch gekennzeichnet, dass** die Durchgangslöcher (3b) und die entsprechenden Vorsprünge (4a) kreisförmige, ovale oder polygonale Querschnitte aufweisen.

15. Bauplattenanordnung (1) nach einem der Ansprüche 1 bis 14, **dadurch gekennzeichnet, dass** die Durchgangslöcher (3b) zu der Rückfläche (3c) hin verjüngt sind und/oder die entsprechenden Vorsprünge (4a) zu der Vorderfläche (3a) hin verjüngt sind.

16. Bauplattenanordnung (1) nach einem der Ansprüche 1 bis 15, **dadurch gekennzeichnet, dass** das Loslösemittel (4) einen motorisierten Aktor aufweist, der angepasst ist, um die Vorsprünge (4a) relativ in die Durchgangslöcher (3b) zu bewegen, um die Komponente (2) loszulösen.

17. Bauplattenanordnung (1) nach einem der Ansprüche 1 bis 16, **dadurch gekennzeichnet, dass** das Loslösemittel (4) ausschließlich von dem Benutzer von Hand angetrieben werden kann.

18. Vorrichtung zur generativen Fertigung, umfassend:
die Bauplattenanordnung (1) nach einem der vorhergehenden Ansprüche; und ein Steuermittel zum Steuern der Bauplattenanordnung (1), wobei das Steuermittel mindestens einen Druckmodus und einen oder mehrere Loslösemodi aufweist;
wobei das Steuermittel angepasst ist, um die Bauplattenanordnung (1) so zu steuern, dass im Druckmodus die Spitzen der Vorsprünge (4a) mit der Vorderfläche (3a) der Bauplatte (3) während des Druckens des Objekts nivelliert sind,
wobei in einem ersten Loslösemodus die Spitzen der Vorsprünge (4a) zunächst durch die Vorderfläche (3a) vorstehen, um das gedruckte Objekt von der Vorderfläche (3a) loszulösen, und anschließend von der Vorderfläche (3a) der Bauplatte (3) zurückgezogen werden, um die Spitzen der Vorsprünge (4a) von dem gedruckten Objekt loszulösen, oder alternativ
in einem zweiten Loslösemodus die Spitzen der Vorsprünge (4a) zunächst von der Vorderfläche (3a) der Bauplatte (3) zurückgezogen werden, um die
Spitzen der Vorsprünge (4a) von dem gedruckten Objekt loszulösen, und anschließend durch die Vorderfläche (3a) vorstehen, um das gedruckte Objekt von der Vorderfläche (3a) loszulösen.

19. Vorrichtung zu generativen Fertigung nach Anspruch 18, **gekennzeichnet durch** weiteres Umfassen von:
einem Messmittel zum Erfassen der auf die Vorsprünge (4a) ausgeübten Kraft, wobei das Steuermittel ferner angepasst ist, um die Bauplattenanordnung (1) basierend auf der erfassten Kraft (4) zu steuern.

20. Verfahren zum Steuern einer Vorrichtung zur generativen Fertigung, wobei die Vorrichtung zur generativen Fertigung nach Anspruch 18 oder 19 ist.

## Revendications

1. Ensemble plaque de construction (1) destiné à être utilisé dans un appareil de fabrication additive comprenant des moyens destinés à la fabrication additive d'un composant (2), à savoir un objet imprimé par durcissement d'une résine photodurcissable liquide dans une cuve, l'ensemble de plaque de construction (1) comprenant :
une plaque de construction (3) possédant une surface avant (3a) sur laquelle ledit composant (2) peut être imprimé couche par couche par durcissement à la lumière de la résine photodurcissable liquide durant la fabrication additive et pour tirer, ledit composant fixé (2) à l'envers, hors de la résine photodurcissable qui remplie la cuve ;
une pluralité de trous traversants (3b) formés entre la surface arrière (3c) et la surface avant (3a) de la plaque de construction (3) ;
**caractérisé en ce qu'**il comprend en outre :
un moyen de détachement (4) possédant une ou plusieurs saillies (4a) qui peuvent être relativement déplacées vers la surface arrière (3c) et dans les trous traversants (3b) pour détacher le composant (2) de la surface avant (3a) et rétractées pour au moins partiellement dégager les trous traversants (3b), ledit moyen de détachement (4) comprenant une plaque de détachement (4b), et lesdits trous traversants (3b) et lesdites saillies correspondantes (4a) étant agencés en un réseau bidimensionnel qui s'étend sur toute la plaque de construction (3) et la plaque de détachement (4b), et lesdits trous traversants (3b) et lesdites saillies correspondantes (4a) formant une structure de type nid d'abeille ou similaire.

2. Ensemble plaque de construction (1) selon la revendication 1, ladite plaque de détachement (4b) étant agencée de manière relativement mobile à l'intérieur d'un espace derrière la surface arrière (3c) de la plaque de construction (3), lesdites saillies (4a) étant agencées sur la plaque de détachement (4b) au niveau d'une pluralité de positions correspondant respectivement aux trous traversants (3b).

3. Ensemble plaque de construction (1) selon la revendication 2, **caractérisé en ce que** la plaque de détachement (4b) et la plaque de construction (3) sont sensiblement parallèles et séparées à travers l'espace.

4. Ensemble plaque de construction (1) selon l'une quelconque des revendications 2 ou 3, **caractérisé en ce que** la plaque de détachement (4b) et la plaque de construction (3) possèdent sensiblement la même taille.

5. Ensemble plaque de construction (1) selon l'une quelconque des revendications 1 à 4, **caractérisé en ce que** les saillies (4a) sont à l'extérieur ou partiellement à l'intérieur des trous traversants (3b) dans la position rétractée, et lesdites pointes des saillies (4a) étant partiellement à l'intérieur des trous traversants (3b), nivelées avec la surface avant (3a) ou saillantes à partir de la surface avant (3a) dans la position la plus déplacée.

6. Ensemble plaque de construction (1) selon l'une quelconque des revendications 2 à 5, **caractérisé en ce que** le moyen de détachement (4) comprend : un moyen élastique (4c) destiné à solliciter la plaque de détachement (4b) au loin de la surface arrière (3c) de la plaque de construction (3).

7. Ensemble plaque de construction (1) selon la revendication 6, **caractérisé en ce que** le moyen élastique (4c) comprend un ou plusieurs ressorts de compression (4d) agencés entre la plaque de détachement (4b) et la plaque de construction (3).

8. Ensemble plaque de construction (1) selon l'une quelconque des revendications 2 à 7, **caractérisé en ce que** le moyen de détachement (4) comprend : un moyen de guidage (4e) destiné à guider de manière stable la plaque de détachement (4b) par rapport à la plaque de construction (3) et à limiter leurs positions relatives.

9. Ensemble plaque de construction (1) selon l'une quelconque des revendications 1 à 8, **caractérisé en ce qu'**il comprend en outre : un moyen de montage (5) destiné à monter de manière amovible la plaque de construction (3) dans l'appareil de fabrication additive.

10. Ensemble plaque de construction (1) selon la revendication 9, **caractérisé en ce que** le moyen de montage (5) est disposé sur le moyen de détachement (4).

11. Ensemble plaque de construction (1) selon la revendication 10, lorsqu'elle dépend de la revendication 2, **caractérisé en ce que** le moyen de montage (5) est disposé sur la plaque de détachement (4b).

12. Ensemble plaque de construction (1) selon la revendication 9, **caractérisé en ce que** le moyen de montage (5) est disposé sur le côté arrière de la plaque de construction (3).

13. Ensemble plaque de construction (1) selon l'une quelconque des revendications 1 à 12, **caractérisé en ce que** les trous traversants (3b) et les saillies correspondantes (4a) possèdent des formes complémentaires avec un jeu suffisamment petit pour permettre le mouvement relatif.

14. Ensemble plaque de construction (1) selon l'une quelconque des revendications 1 à 13, **caractérisé en ce que** les trous traversants (3b) et les saillies correspondantes (4a) possèdent des sections transversales circulaires, ovales ou polygonales.

15. Ensemble plaque de construction (1) selon l'une quelconque des revendications 1 à 14, **caractérisé en ce que** les trous traversants (3b) sont coniques vers la surface arrière (3c) et/ou les saillies correspondantes (4a) sont coniques vers la surface avant (3a).

16. Ensemble plaque de construction (1) selon l'une quelconque des revendications 1 à 15, **caractérisé en ce que** le moyen de détachement (4) comporte un actionneur motorisé qui est adapté pour déplacer les saillies (4a) relativement dans les trous traversants (3b) de façon à détacher le composant (2).

17. Ensemble plaque de construction (1) selon l'une quelconque des revendications 1 à 16, **caractérisé en ce que** le moyen de détachement (4) peut être uniquement entraîné à la main par l'utilisateur.

18. Appareil de fabrication additive, comprenant :
l'ensemble plaque de construction (1) selon l'une quelconque des revendications précédentes ; et un moyen de commande destiné à commander l'ensemble plaque de construction (1), ledit moyen de commande possédant au moins un mode d'impression et un ou plusieurs modes de détachement ;
ledit moyen de commande étant adapté pour commander l'ensemble plaque de construction (1) de sorte que, dans le mode d'impression, les pointes des saillies (4a) soient nivelées avec la surface avant (3a) de la plaque de construction (3) durant l'impression de l'objet,
dans un premier mode de détachement, les pointes des saillies (4a) soient d'abord saillantes à travers la surface avant (3a) de façon à détacher l'objet imprimé de la surface avant (3a), et ensuite rétractées de la surface avant (3a) de la plaque de construction (3) afin de détacher les pointes des saillies (4a) de l'objet imprimé, ou alternativement
dans un second mode de détachement, les pointes des saillies (4a) soient d'abord rétractées de la surface avant (3a) de la plaque de construction (3) afin de détacher les pointes des saillies (4a) de l'objet imprimé, et ensuite saillantes à travers la surface avant (3a) de façon à détacher l'objet imprimé de la surface avant (3a).

19. Appareil de fabrication additive selon la revendication 18, caractérisé en comprenant en outre : un moyen de mesure destiné à détecter la force exercée sur les saillies (4a), ledit moyen de commande étant en outre adapté pour commander l'ensemble plaque de construction (1) sur la base de la force détectée (4).

20. Procédé de commande d'un appareil de fabrication additive, ledit appareil de fabrication additive étant selon la revendication 18 ou 19.
